# EUROPÄISCHE PATENTSCHRIFT

(11) **EP 2 883 741 B1**
(45) Veröffentlichungstag und Bekanntmachung des Hinweises auf die Patenterteilung: **07.02.2018**
(21) Anmeldenummer: 14004050.2
(22) Anmeldetag: 02.12.2014
(51) Int. Cl.: B60N 2/00

(54) **Einheit für die Sitzbelegungserkennung eines Fahrzeugsitzes**
Unit for occupant detection for a vehicle seat
Unité pour la reconnaissance d'occupation d'un siège de véhicule

(30) Priorität: 10.12.2013 DE 202013010948 U
(43) Veröffentlichungstag der Anmeldung: 17.06.2015
(73) Patentinhaber: I.G. Bauerhin GmbH, 63584 Gründau (DE)
(72) Erfinder: Yetim, Züher, 63571 Gelnhausen (DE); Michelmann, Jochen, 63571 Gelnhausen (DE)
(74) Vertreter: Grimm, Ekkehard

(56) Entgegenhaltungen:
- DE-A1-102004 031 143
- DE-A1-102006 011 015
- DE-A1-102010 043 416
- DE-A1-102010 043 417
- US-A- 4 795 865
- US-A- 5 424 502

## Beschreibung

Die vorliegende Erfindung betrifft eine Einheit für die Sitzbelegungserkennung eines Fahrzeugsitzes mit mindestens einer Schaltereinheit, die ein Gehäuse mit einem oberen Gehäuseteil und einem unteren Gehäuseteil und mindestens einem in dem Gehäuse angeordneten Schaltelement, das durch ein an einem der Gehäuseteile angeordneten Auslöseelement betätigbar ist, umfasst, wobei die Gehäusehälften relativ zueinander bewegbar sind und durch eine Feder in einer Ausgangsstellung so auf Abstand gehalten sind, dass das Auslöseelement das Schaltelement nicht betätigt, und dass die Gehäusehälften, ausgehend von dieser Ausgangsstellung, gegen die Federkraft der Feder, so gegeneinander verschiebbar sind, dass das Auslöseelement das Schaltelement betätigt.

Eine solche Einheit ist beispielsweise aus der DE 10 2004 031 143 A1 bekannt. Dieses Dokument beschreibt eine Sensoranordnung zur Verwendung in einem Fahrzeugsitzpolster, die dazu dient, die Belegung eines Sitzes durch eine Person zu ermitteln. Die Sensoranordnung umfasst ein erstes Teil und ein zweites Teil, die gegeneinander gegen den Druck einer Feder, die in einem Innenraum der Teile angeordnet ist, verschiebbar sind. Dem einen Teil ist ein Magnet zugeordnet, während das andere Teil einen Halleffekt-Sensor aufweist. Durch die Feder wird in einer Ausgangsstellung der Magnet in einem vorbestimmten Abstand gegen den Halleffekt-Sensor gehalten. Wenn sich auf dem Sitzpolster eine Person niederlässt, wird der Magnet der Sensoranordnung zu dem Halleffekt-Sensor hin verschoben und der Halleffekt-Sensor stellt die verschobene Position des Magnetfelds fest und erzeugt dadurch ein Sensoreingangssignal für eine Steuerung, das dem auf die Sensoranordnung einwirkenden Gewicht oder der einwirkenden Kraft entspricht. Wenn die Person das Sitzpolster verlässt, werden die beiden Teile der Sensoranordnung durch die Feder wieder in ihre Ausgangsstellung gedrückt. Eine Vielzahl dieser Sensoranordnungen ist auf einer Matte verteilt, so dass das über die Sitzfläche verteilte Gewicht ermittelt werden kann.

Ein ähnliches Fahrzeuginsassen-Erfassungssystem ist in der DE 10 2006 011 015 A1 beschrieben. Dieses Erfassungssystem umfasst eine Vielzahl von Sensoranordnungen, jeweils mit einem Basisteil und einem oberen Gleitteil, das so gehalten ist, dass es sich zu der Basis hin und von diesem weg bewegen kann. Basisteil und Gleitteil werden in einer Ausgangsstellung durch eine Feder auf Abstand gehalten. Im Innern dieser Sensoranordnung befinden sich ein Emitter und ein Sensor, beispielsweise ein Permanentmagnet und ein Halleffekt-Sensor.

Die DE 10 2010 043 416 A1 beschreibt einen Fahrzeugsitz mit wenigstens einem Sitzbelegungsschalter, wobei der Sitzbelegungsschalter im Bereich der Federstäbe an der Unterseite des Sitzkissens angeordnet ist. Der Sitzbelegungsschalter weist ein Gehäuse sowie ein Betätigungselement, das relativ zu dem Gehäuse bewegbar angeordnet ist, auf. Die Schaltelemente des Sitzbelegungsschalters sind aus Kontaktteilen aufgebaut, die in das Gehäuse eingelegt sind.

Die DE 10 2010 043 417 A1 beschreibt einen Sitzbelegungsschalter, der in seinem Grundaufbau mit demjenigen vergleichbar ist, der in der DE 10 2010 043 416 A1 beschrieben ist. In einem Gehäuse befindet sich eine Leiterplatte mit einem ersten Kontakt und einem zweiten Kontakt sowie eine Federscheibe, die sich dann, wenn auf das Gehäuse eine Kraft einwirkt, so verformt, dass der erste Kontakt mit dem zweiten Kontakt elektrisch verbunden wird. Von der Unterseite der Leiterplatte führen Kontaktstifte, die mit den jeweiligen Kontakten verbunden sind, zu der Außenseite des Gehäuses für einen elektrischen Anschluss.

Die US 5 424 502 A beschreibt eine Sicherheitsschalteranordnung zum Deaktivieren eines Motorfahrzeugs, falls sich der Benutzer des Fahrzeugs nicht auf dem Fahrzeugsitz befindet. Es wird eine groß dimensionierte Schalteranordnung eingesetzt, die aus einer Basis, in die ein Schalter eingesetzt ist, und einem Deckel, der eine Deckelfläche aufweist, wobei der Deckel an der Basis verankert ist, besteht. Die Basis ist in einem Ausschnitt bzw. einer Öffnung einer Sitzwanne und somit unterhalb des Sitzpolsters eingesetzt. Ein Aktuator, der von dem Gehäuse des Schalters vorsteht, wird über die Deckelfläche des Deckels betätigt, die, wenn sich ein Fahrer auf den Sitz setzt, durch das Sitzpolster nach unten gedrückt wird. Wenn der Fahrer den Sitz verlässt, drückt der Aktuator des Schalters den Deckel über die Deckelfläche wieder nach oben, da der Aktuator über ein nicht näher spezifiziertes Teil in dem Schaltergehäuse immer in diese Ausgangsstellung gedrückt wird. Der Schaltpunkt des Schalters und damit die Kraft, die ausgeübt werden muss, um den Schalter zu betätigen, wird nur durch die Vorspannkraft festgelegt wird, mit der der Aktuator in dem Schaltergehäuse nach oben gedrückt wird.

Die DE 10 2010 043 417 A1 beschreibt einen Sitzbelegungsschalter und einen Fahrzeugsitz mit einem solchen Sitzbelegungsschalter. Der Sitzbelegungsschalter weist ein Gehäuse mit einem Unterteil und einem Oberteil auf; das Oberteil besitzt eine Öffnung, durch die ein Betätigungselement nach außen vorsteht. Innerhalb des Gehäuses befindet sich eine Leiterplatte, auf der sich Schaltkontakte, die mit Leiterbahnen der Leiterplatte verbunden sind, befinden, mit denen Kontakte, die durch die vier Ecken einer Federscheibe gebildet sind, in Kontakt stehen. Diese Federscheibe ist derart gewölbt, dass ein mittlerer Kontakt der Federscheibe, der als Ausnehmung bezeichnet wird, von einem Schaltkontakt auf der Leiterplatte getrennt ist. Wenn auf das Betätigungselement eine Kraft ausgeübt wird, wird die Federscheibe so durch das Betätigungselement zusammengedrückt, dass der Kontakt bzw. die Ausnehmung mit dem Schaltkontakt auf der Leiterplatte in Kontakt tritt, so dass durch die Federscheibe eine elektrische Verbindung hergestellt wird. Die Auslösekraft, um den Schaltvorgang durch die Federscheibe zu erzielen, wird nur durch die Federscheibe bestimmt, so dass die Federscheibe, entsprechend stark dimensioniert, sowohl die Schaltschwelle festlegt als auch den Schaltvorgang selbst vornimmt.

Die Anordnungen, wie sie vorstehend beschrieben sind, stellen eine konstruktiv einfache Lösung für die Sitzbelegungserkennung in Fahrzeugen dar, insbesondere verglichen mit Foliendrucksensoren.

Der vorliegenden Erfindung liegt die Aufgabe zugrunde, eine Einheit für die Sitzbelegungserkennung eines Fahrzeugsitzes mit den vorstehend angegebenen Merkmalen so auszubilden, dass sie Schaltvorgänge mit geringer Streuung durchführt und eine kostengünstige Anordnung ermöglicht.

Gelöst wird diese Aufgabe durch eine Einheit für die Sitzbelegungserkennung mit den Merkmalen des Anspruchs 1. Diese Anordnung zeichnet sich dadurch aus, dass das Schaltelement mindestens einen Mikroschalter umfasst. Bei einem solchen Mikroschalter handelt es sich um ein einfaches, handelsübliches Bauteil, das in einer Vielfalt verfügbar ist. Somit können geeignete Schalter für den Einsatz in der Einheit für die Sitzbelegungserkennung aus dieser Vielfalt der angebotenen Bauteile ausgewählt werden, die als Massenware äußerst kostengünstig sind. Derartige Mikroschalter benötigen nur eine sehr geringe Kraft, um einen Schaltvorgang auszulösen. Daher sind auch die Schaltvorgänge der Mikroschalter reproduzierbar, außerdem zeigen die Mikroschalter nur geringe Streuungen untereinander in Bezug auf deren Schaltschwellen.

Der mindestens eine Mikroschalter stützt sich auf einer Bodenfläche des unteren Gehäuseteils ab und wird durch die Bewegung des oberen Gehäuseteils gegen die Federkraft der Feder, ausgehend von einer Ausgangsstellung, in der der Sitz nicht belegt ist, betätigt.

Der Mikroschalter stützt sich über eine auf der Bodenfläche des unteren Gehäuseteils aufliegenden Trägerplatte ab, so dass eine breite und stabile Basis für den Mikroschalter in dem Gehäuseteil geschaffen ist. Ein besonderer Vorteil ist dadurch gegeben, dass diese Trägerplatte durch eine Leiterplatte gebildet ist, die mit dem Mikroschalter bestückt ist. Diese Leiterplatte ist auch dahingehend von Vorteil, dass sie mit weiteren diskreten Bauteilen bestückt werden kann. Um zum Beispiel den Funktionszustand der Schaltereinheit zu überprüfen, kann hierzu die Leiterplatte mit mindestens einem Widerstand als weiteres Bauteil bestückt werden.

Die Leiterplatte sollte eine Breite und/oder eine Länge von 6 mm bis 30 mm aufweisen, vorzugsweise in einem rechteckigen Format, wobei die Ecken auch abgerundet sein können.

Die Leiterplatte kann auch ein rundes Format aufweisen mit einem Durchmesser von 10 mm bis 30 mm. Die Leiterplatte kann auch in etwa die Größe der Grundfläche des Gehäuseunterteils oder des Gehäuseoberteils aufweisen.

Um die Trägerplatte oder die als Trägerplatte eingesetzte Leiterplatte an dem unteren Gehäuseteil zu fixieren, wird mindestens ein Stift vorgesehen, der in dem Gehäuse verankert ist.

Um sowohl die Leiterplatte an dem unteren Gehäuseteil zu fixieren als auch einen elektrischen Anschluss zu der Außenseite des Gehäuses hin zu bilden, wird an der Leiterplatte mindestens ein Kontaktstift vorgesehen. In Abhängigkeit davon, wie die Einheit in einem Sitz eingebaut werden soll, erstreckt sich der mindestens eine Kontaktstift etwa senkrecht zu der Fläche der Leiterplatte, so dass der Anschluss an der Unterseite des Gehäuses erfolgen kann; alternativ dazu erstreckt sich der mindestens eine Kontaktstift etwa parallel zu der Fläche der Leiterplatte, so dass ein elektrischer Anschluss über eine Seitenfläche des Gehäuses vorgenommen werden kann. Auf der Außenseite des Gehäuses sollte ein Verbindungselement angeordnet werden, das einen Teil des Gehäuses bilden kann, in den sich der mindestens eine Kontaktstift hinein erstreckt.

Um die Auslöseschwelle des Mikroschalters festzulegen, sollte die Federkraft der Feder so ausgelegt sein, dass der Mikroschalter bei einem auf das Gehäuse einwirkenden Gewicht von mindestens 500 Gramm, vorzugsweise von 1000 Gramm bis 2500 Gramm, besonders bevorzugt von 1000 Gramm bis 1500 Gramm, schaltet. In diesen Bereichen ist es möglich, die unterschiedlichen Bedingungen einer Sitzbelegung zu unterscheiden und damit zu detektieren.

Um über einen großen Temperaturbereich von Temperaturschwankungen, die üblicherweise in einem Fahrzeug auftreten, reproduzierbare Signale über den Belegungszustand zu erhalten, ist vorgesehen, dass das Schaltelement mit dem mindestens einen Mikroschalter, ausgehend von der Ausgangsstellung, mindestens zwei Schaltzustände aufweist. Bevorzugt sind hierzu zwei Mikroschalter vorgesehen, die jeweils einen Schaltzustand aufweisen und bei unterschiedlichen Auslöseschwellen schalten. Erst bei Erreichen des Signals des zweiten Schaltelements mit der zweiten Auslöseschwelle wird als Signal herangezogen, um einen belegten Zustand eines Sitzes anzuzeigen. Dagegen wird erst ein Erreichen wieder der ersten Auslöseschwelle, nachdem ein belegter Zustand des Sitzes angezeigt wurde, dafür verwendet, den als belegt ermittelten Zustand zurückzusetzen.

Um die zwei unterschiedlichen Auslöseschwellen einzustellen, werden bevorzugt mindestens zwei Federn vorgesehen, durch die die unterschiedlichen Auslöseschwellen durch deren jeweilige Federkraft bzw. Federkonstante festgelegt sind.

In dem Gehäuse kann eine die Signale des Schaltelements verarbeitende Auswerteeinheit angeordnet werden, die darüber hinaus auf der Trägerplatte bzw. Leiterplatte, auf der der Mikroschalter angeordnet ist, integriert ist, beispielsweise durch einen entsprechenden IC oder Mikroprozessor.

Weiterhin kann in dem Gehäuse ein Temperatursensor integriert sein, um die aktuellen Temperaturen im Bereich der Einheit zu erfassen. Diese Temperaturen werden dann bei der Ermittlung der Belegungszustände berücksichtigt, da Temperaturschwankungen, wie sie in einem Fahrzeug auftreten können, das Schaltverhalten der Einheit beeinflussen. Hierzu wird beispielsweise der Temperatursensor mit der Auswerteeinheit verbunden.

Weitere Einzelheiten und Merkmale der Erfindung ergeben sich aus der nachfolgenden Beschreibung von Ausführungsbeispielen anhand der Zeichnung. In der Zeichnung zeigt
- Figur 1A: eine perspektivische Ansicht einer erfindungsgemäßen Einheit gemäß einer ersten Ausführungsform,
- Figur 1B: einen Schnitt entlang der Schnittlinie 1B-1B in Figur 1A,
- Figur 1C: die Schnittdarstellung der Figur 1B in einer Explosionsdarstellung,
- Figur 1D: die Einheit der Figur 1A ohne das obere Gehäuseteil in einer perspektivischen Draufsicht von schräg oben,
- Figur 2A: eine perspektivische Ansicht einer erfindungsgemäßen Einheit gemäß einer zweiten Ausführungsform, und
- Figur 2B: einen Schnitt entlang der Schnittlinie 2B-2B in Figur 2A.

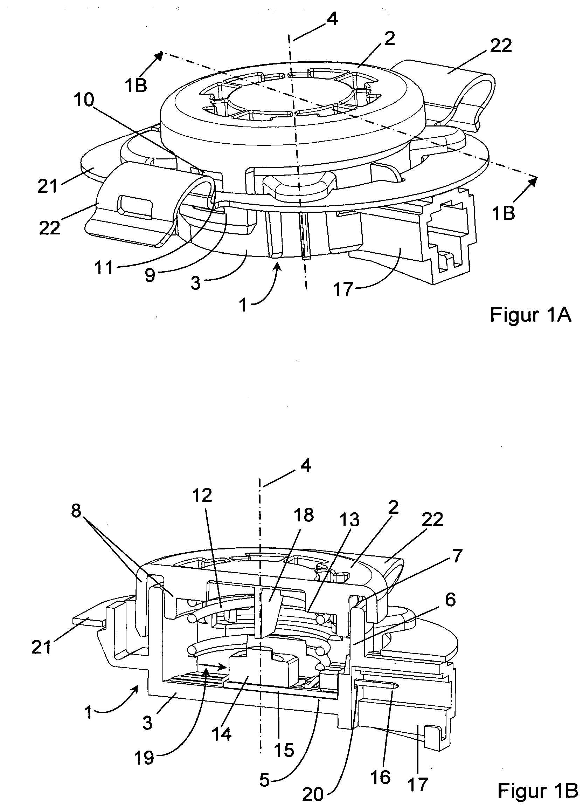

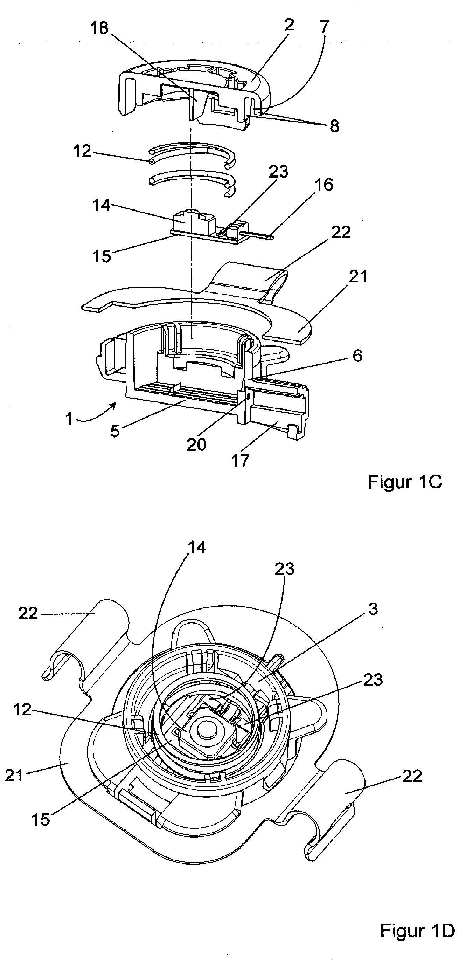

Die Einheit für die Sitzbelegungserkennung eines Fahrzeugsitzes gemäß einer ersten Ausführungsform, wie sie in den Figuren 1A bis 1D dargestellt ist, umfasst ein Gehäuse 1 mit einem oberen Gehäuseteil 2 und einem unteren Gehäuseteil 3. Die beiden Gehäusehälften sind topfförmig aufgebaut und sind in Richtung deren Achse, die mit dem Bezugszeichen 4 bezeichnet ist, die senkrecht auf einer Bodenfläche 5 des unteren Gehäuseteils 3 ausgerichtet ist, zueinander verschiebbar.

Der mögliche Verschiebeweg der beiden Gehäuseteile 2 und 3 zueinander ist begrenzt. Hierzu greift eine umlaufende Seitenwand 6 des unteren Gehäuseteils 3 in eine umlaufende Nut 7, die durch zwei umlaufende Seitenwände 8 des oberen Gehäuseteils 2 gebildet ist, ein. Dadurch können die beiden Gehäuseteile 2 und 3 nur soweit zusammengeschoben werden, bis die Stirnfläche der Seitenwand 6 des unteren Gehäuseteils 3 an die Bodenfläche 5 der umlaufenden Nut 7 anschlägt. In der anderen Richtung ist der maximale Verschiebeweg des oberen Gehäuseteils 2 zu dem unteren Gehäuseteil 3 durch mindestens zwei Laschen 9 begrenzt, die an der Außenseite der Seitenwand 6 des unteren Gehäuseteils 3 anliegen und jeweils ein Fenster 10 aufweisen, in das sich ein Vorsprung 11 an der Außenseite der Seitenwand 6 hinein erstreckt. Die Vorsprünge 11 besitzen eine Länge, in Richtung der Achse 4 gesehen, die geringer ist als die Öffnungsweite des jeweiligen Fensters 10 in dieser Richtung. Die Differenz zwischen dieser Länge der Vorsprünge 11 und der Öffnungsweite der Fenster 10 legt die Größe des möglichen Verschiebewegs des oberen Gehäuseteils 2 zu dem unteren Gehäuseteil 3 fest.

In dem Innenraum des Gehäuses 1 ist eine Schraubenfeder 12 eingesetzt, die sich auf der Bodenfläche 5 des unteren Gehäuseteils 3 einerseits und an der Deckenfläche 13 des oberen Gehäuseteils 2 abstützt. Diese Schraubenfeder 12 besitzt einen Durchmesser, der annähernd dem Innendurchmesser des Innenraums des Gehäuses angepasst ist. Diese Schraubenfeder 12 ist so ausgelegt, dass sie in einer Ausgangsstellung die beiden Gehäuseteile 2 und 3 unter maximalem Abstand zueinander halten.

Auf der Bodenfläche 5 des unteren Gehäuseteils 3 befindet sich ein Mikroschalter 14, der nur schematisch dargestellt ist. Dieser Mikroschalter 14 ist nicht unmittelbar auf der Bodenfläche 5 montiert, sondern über eine Trägerplatte 15, die als Leiterplatte ausgeführt ist. Auf diese Trägerplatte bzw. Leiterplatte 15 ist der Mikroschalter 14 als Leiterplattenbauteil aufgelötet. Gleichzeitig befinden sich an dieser Leiterplatte 15 Anschlussstifte 16, die die Leiterbahnen der Leiterplatte zur Außenseite des Gehäuses 1 hin, und dort in einem Verbindungselement 17 als Teil des Gehäuses 1 endend, verbinden. Wie weiterhin anhand der Figur 1B, ebenso wie anhand der Figur 1C, zu erkennen ist, befindet sich an der Deckenfläche 13 des oberen Gehäuseteils 2 ein Auslöseelement 18; hierbei handelt es sich um ein von der Deckenfläche 13 vorstehendes Flächenteil, oder Nocken, das dann, wenn das obere Gehäuseteil 2 durch eine auf dieses einwirkende Kraft nach unten zu dem unteren Gehäuseteil 3 hin verschoben wird, den Mikroschalter 14 betätigt.

Die Trägerplatte bzw. Leiterplatte 15, auf der der Mikroschalter 14 angeordnet ist, bildet eine stabile Auflage für den Mikroschalter 14. Die Abmessungen dieser Platte 15 liegen im Bereich von 6 mm bis 30 mm, wobei die Grundfläche des Mikroschalters 14 weniger als 30% der Fläche der Platte 15 belegt.

Die Platte 15 besitzt eine Länge, in Richtung des Anschlussstifts 16 gesehen (siehe Figuren 1B und 1C), die geringer ist als der Durchmesser des unteren Gehäuseteils 3 in dieser Richtung. Darüber hinaus ist die Länge der Platte 15 einschließlich der Länge des Anschlussstifts 16 so gewählt, dass sie nicht größer als der Durchmesser des unteren Gehäuseteils 3 ist. Aufgrund dieser Abmessungen kann, um den Mikroschalter 14 mit der Trägerplatte 15 in dem unteren Gehäuseteil 3 zu montieren, dieses Bauteil zunächst auf die Bodenfläche 5 des unteren Gehäuseteils 3 aufgesetzt werden, um dann die Platte 15 auf der Bodenfläche 5 in Richtung des Pfeils 19 zu verschieben, so dass sich der Anschlussstift oder die Anschlussstifte 16 in entsprechend positionierte Bohrungen 20 in der Seitenwand 6 des unteren Gehäuseteils 3 einsetzen. Somit sind keine weiteren Befestigungsteile erforderlich, um den Mikroschalter 14 in dem unteren Gehäuseteil 3 zu befestigen.

Um die Einheit, wie sie in den Figuren dargestellt ist, in einem Fahrzeugsitz, beispielsweise an einer gitterförmigen Tragekonstruktion des Sitzes, zu befestigen, ist das Gehäuse 1 durch einen Rahmen 21, vorzugsweise aus Metall, umgeben, der an geeigneten Stellen Klammern 22 zum Eingreifen in Teile der Tragekonstruktion umfasst.

Die als Leiterplatte 15 ausgeführte Trägerplatte, um den Mikroschalter 14 aufzunehmen, hat den Vorteil, dass diese Leiterplatte 15 mit weiteren diskreten Bauteilen, wie beispielsweise mit mindestens einem Widerstand 23, bestückt werden kann, ohne dass hierzu weitere Befestigungs- und/oder Halteelemente notwendig sind. Ein solcher Widerstand 23 wird in der Anordnung, wie sie hier beschrieben wird, dazu verwendet, in einer passenden Schaltungseinheit den Funktionszustand des Mikroschalters zu überprüfen.

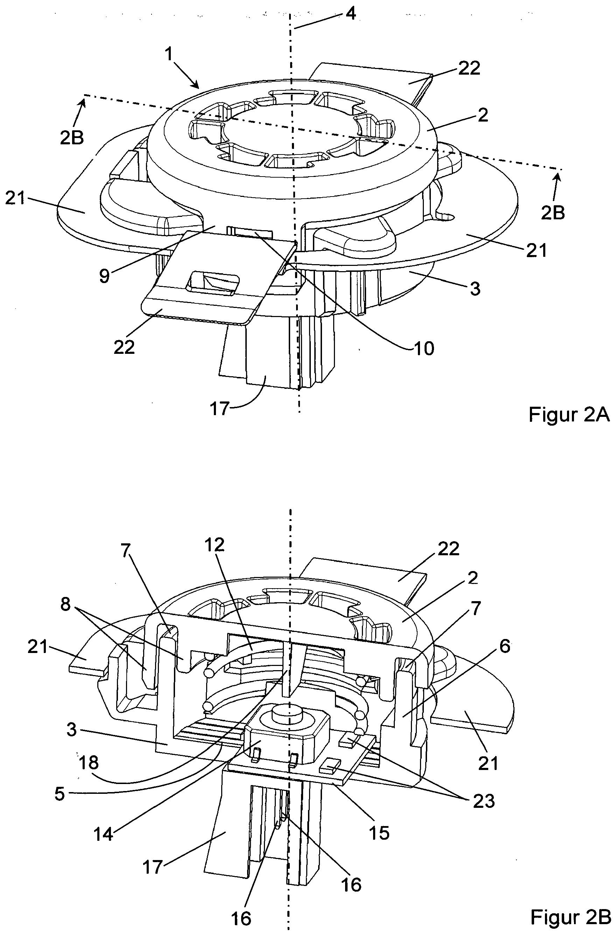

Während die Figuren 1A bis 1D eine erste Ausführungsform der erfindungsgemäßen Einheit zeigen, ist in den Figuren 2A und 2B eine zweite Ausführungsform dargestellt. Diese zweite Ausführungsform unterscheidet sich von der ersten Ausführungsform dadurch, dass der mindestens eine Kontaktstift, der den Mikroschalter 14 bzw. die Leiterplatte 15 zu der Außenseite des Gehäuses 1 hin verbindet, nicht parallel zu der Bodenfläche 5 des unteren Gehäuseteils 3 bzw. senkrecht zu der Achse 4 des Gehäuses 1 nach außen geführt ist, sondern in einer Richtung, die senkrecht zu der Bodenfläche 5 bzw. parallel zu der Achse 4 verläuft. Entsprechend ist das Verbindungselement 17 an der Unterseite des Bodens des unteren Gehäuseteils 3 angeordnet.

Um den Mikroschalter 14 mit der Leiterplatte 15 als Trägerplatte auf der Bodenfläche 5 des unteren Gehäuseteils 3 zu montieren, wird die Leiterplatte 15 mit den von der Unterseite vorstehenden Anschlussstiften 16 durch entsprechende Bohrungen, die in den Figuren 2A und 2B nicht zu sehen sind, hindurchgesteckt, so dass sie in dem Verbindungselement 17 enden.

An dieser Stelle ist darauf hinzuweisen, dass in den beiden Ausführungsformen, wie sie in den Figuren dargestellt sind, Bauteile, die in ihrer Funktion in beiden Ausführungsformen vergleichbar sind, mit denselben Bezugszeichen versehen, so dass Angaben zu einer Ausführungsform auf die entsprechenden Bauteile der anderen Ausführungsform übertragen werden können, ohne dass dies ausdrücklich erwähnt ist. Auch können die Begriffe "oberes Gehäuseteil" und "unteres Gehäuseteil" in Abhängigkeit davon, in welcher Orientierung das Gehäuse in einem Sitz eingebaut wird, ausgetauscht werden.

Die Federkraft der Feder 12 ist so ausgelegt, dass die beiden Gehäuseteile 2 und 3 erst gegeneinander verschoben werden können, wenn die durch die Feder 12 ausgeübte Federkraft überwunden wird. Erst dann kann das Auslöseelement 18 mit dem Mikroschalter 14 in Kontakt gelangen. Um ein Auslösen des Schaltkontakts zu erreichen, ist die Einheit über die Feder 12 so ausgelegt, dass auf das Gehäuse ein Gewicht von mindestens 500 Gramm, vorzugsweise von 1000 Gramm bis 2500 Gramm, besonders bevorzugt von 1000 Gramm bis 1500 Gramm, einwirken muss. Unterhalb dieser Schwelle wird davon ausgegangen, dass noch keine Person auf dem Sitz Platz genommen hat.

Um dem Schaltverhalten des Mikroschalters 14 eine Hysterese aufzuerlegen, sollte das Schaltelement mit dem mindestens einen Mikroschalter 14, ausgehend von der Ausgangsstellung, mindestens zwei Schaltzustände aufweisen. Vorzugsweise werden hierzu zwei Mikroschalter 14 vorgesehen; jeder der beiden Mikroschalter besitzt dann eine unterschiedliche Auslöseschwelle, um einen Schaltzustand (ein oder aus) vorzunehmen.

Diese unterschiedlichen Auslöseschwellen können auch dadurch erreicht werden, dass in dem Gehäuse 1 zwei unterschiedliche Federn eingesetzt sind und die unterschiedlichen Auslöseschwellen durch die jeweilige Federkraft der zwei Federn festgelegt sind.

In dem Gehäuse 1 wird bevorzugt auch eine Auswerteeinheit eingesetzt, die die Signale des Schaltelements unmittelbar verarbeitet. Dadurch sind nur kurze Verbindungen zwischen der Auswerteeinheit und dem Mikroschalter innerhalb des Gehäuses 1 erforderlich, wodurch die Handhabung der Einheit vereinfacht wird. Weiterhin kann in dem Gehäuse 1 ein Temperatursensor, der nicht näher dargestellt ist, integriert werden, vorzugsweise als diskretes Bauteil auf der Leiterplatte 15. Über diesen Temperatursensor wird die Temperatur im Bereich der Einheit ermittelt, um diesen Temperaturwert zur Korrektur des Auslösepunkts des Mikroschalters bei starken Temperaturschwankungen innerhalb des Fahrzeugs heranzuziehen. Es wurde nämlich festgestellt, dass die Temperatur im Fahrzeug die Auslöseschwelle des Schaltelements stark beeinflussen kann, beispielsweise auch dadurch, dass sich bei den unterschiedlichen Temperaturen die Stauchhärte des Sitzpolsters ändert.

## Patentansprüche

1. Einheit für die Sitzbelegungserkennung eines Fahrzeugsitzes mit mindestens einer Schaltereinheit, die ein Gehäuse (1) mit einem oberen Gehäuseteil (2) und einem unteren Gehäuseteil (3) und mindestens einem in dem Gehäuse angeordneten Schaltelement (14), das durch ein an einem der Gehäuseteile angeordneten Auslöseelement (18) betätigbar ist, umfasst, wobei die Gehäusehälften (2, 3) relativ zueinander bewegbar sind und durch eine Feder in einer Ausgangsstellung so auf Abstand gehalten sind, dass das Auslöseelement (18) das Schaltelement (14) nicht betätigt, und dass die Gehäusehälften (2, 3), ausgehend von dieser Ausgangsstellung, gegen die Federkraft der Feder, so gegeneinander verschiebbar sind, dass das Auslöseelement (18) das Schaltelement (14) betätigt, **dadurch gekennzeichnet, dass** das Schaltelement mindestens einen Mikroschalter (14) umfasst, dass sich der Mikroschalter (14) über eine auf einer Bodenfläche (5) des unteren Gehäuseteils (3) aufliegenden Trägerplatte (15) abstützt, die durch eine Leiterplatte gebildet ist, die mit dem Mikroschalter (14) bestückt ist, und dass die Feder durch eine Schraubenfeder (12) gebildet ist.

2. Einheit nach Anspruch 1, **dadurch gekennzeichnet, dass** die Trägerplatte (15) mindestens einen Kontaktstift (16) aufweist, mit dem sie an dem unteren Gehäuseteil (3) fixiert ist.

3. Einheit nach Anspruch 2, **dadurch gekennzeichnet, dass** die Leiterplatte (15) mindestens einen Kontaktstift (16) aufweist, der sowohl die Leiterplatte (15) an dem unteren Gehäuseteil (3) fixiert als auch ein elektrisches Anschlussteil zu der Außenseite des Gehäuses (1) hin bildet.

4. Einheit nach Anspruch 3, **dadurch gekennzeichnet, dass** sich der mindestens eine Kontaktstift (16) etwa senkrecht zu der Fläche der Leiterplatte (15) erstreckt.

5. Einheit nach Anspruch 3, **dadurch gekennzeichnet, dass** sich der mindestens eine Kontaktstift (16) etwa parallel zu der Fläche der Leiterplatte (15) erstreckt.

6. Einheit nach Anspruch 4 oder 5, **dadurch gekennzeichnet, dass** auf der Außenseite des Gehäuses (1) ein Verbindungselement (17) angeordnet ist, in das sich der mindestens eine Kontaktstift (16) erstreckt.

7. Einheit nach einem der Ansprüche 1 bis 6, **dadurch gekennzeichnet, dass** das Schaltelement mit dem mindestens einen Mikroschalter (14), ausgehend von der Ausgangsstellung, mindestens zwei Schaltzustände aufweist.

8. Einheit nach Anspruch 7, **dadurch gekennzeichnet, dass** zwei Mikroschalter (14) vorgesehen sind, wobei die beiden Mikroschalter (14) jeweils einen Schaltzustand aufweisen und bei unterschiedlichen Auslöseschwellen schalten.

9. Einheit nach Anspruch 7 oder 8, **dadurch gekennzeichnet, dass** mindestens zwei Schraubenfedern (12) vorgesehen sind, wobei die unterschiedlichen Auslöseschwellen durch die jeweilige Federkraft der zwei Schraubenfedern (12) festgelegt sind.

10. Einheit nach einem der Ansprüche 1 bis 9, **dadurch gekennzeichnet, dass** in dem Gehäuse (1) eine die Signale des Schaltelements (14) verarbeitende Auswerteeinheit angeordnet ist.

11. Einheit nach einem der Ansprüche 1 bis 10, **dadurch gekennzeichnet, dass** in dem Gehäuse (1) ein Temperatursensor integriert ist.

12. Einheit nach Anspruch 11 in Verbindung mit Anspruch 10, **dadurch gekennzeichnet, dass** der Temperatursensor mit der Auswerteeinheit verbunden ist.

## Claims

1. Unit for detecting occupancy of a vehicle seat, with at least one switch unit which comprises a housing (1) with an upper housing part (2) and a lower housing part (3) and at least one switch element (14) which is arranged in the housing and which can be actuated by a trigger element (18) arranged on one of the housing parts, wherein the housing halves (2, 3) are movable relative to each other and, in a starting position, are held at a distance by a spring such that the trigger element (18) does not actuate the switch element (14), and such that the housing halves (2, 3), proceeding from this starting position, are movable toward each other counter to the spring force of the spring such that the trigger element (18) actuates the switch element (14), **characterized in that** the switch element comprises at least one microswitch (14), **in that** the microswitch (14) is supported via a carrier plate (15) which lies on a bottom surface (5) of the lower housing part (3) and which is formed by a printed circuit board which is populated with the microswitch (14), and **in that** the spring is formed by a helical spring (12).

2. Unit according to Claim 1, **characterized in that** the carrier plate (15) has at least one contact pin (16), with which it is fixed on the lower housing part (3).

3. Unit according to Claim 2, **characterized in that** the printed circuit board (15) has at least one contact pin (16) which both fixes the printed circuit board (15) on the lower housing part (3) and forms an electrical attachment part to the outside of the housing (1).

4. Unit according to Claim 3, **characterized in that** the at least one contact pin (16) extends approximately perpendicularly with respect to the surface of the printed circuit board (15).

5. Unit according to Claim 3, **characterized in that** the at least one contact pin (16) extends approximately parallel to the surface of the printed circuit board (15).

6. Unit according to Claim 4 or 5, **characterized in that** a connection element (17) is arranged on the outside of the housing (1), into which connection element (17) the at least one contact pin (16) extends.

7. Unit according to one of Claims 1 to 6, **characterized in that** the switch element with the at least one microswitch (14) has at least two switching states, proceeding from the starting position.

8. Unit according to Claim 7, **characterized in that** two microswitches (14) are provided, wherein the two microswitches (14) each have a switching state and switch at different triggering thresholds.

9. Unit according to Claim 7 or 8, **characterized in that** at least two helical springs (12) are provided, wherein the different triggering thresholds are set by the respective spring force of the two helical springs (12).

10. Unit according to one of Claims 1 to 9, **characterized in that** an evaluation unit that processes the signals of the switch element (14) is arranged in the housing (1).

11. Unit according to one of Claims 1 to 10, **characterized in that** a temperature sensor is integrated in the housing (1).

12. Unit according to Claim 11 in conjunction with Claim 10, **characterized in that** the temperature sensor is connected to the evaluation unit.

## Revendications

1. Unité destinée à détecter l'occupation d'un siège de véhicule, comportant au moins une unité de commutation, laquelle comprend un boîtier (1) avec une pièce supérieure de boîtier (2) et une pièce inférieure de boîtier (3) et au moins un élément de commutation (14) disposé dans le boîtier et pouvant être actionné par un élément de déclenchement (18) disposé sur une des pièces de boîtier, dans laquelle les moitiés de boîtier (2, 3) sont mobiles l'une par rapport à l'autre et sont maintenues espacées par un ressort dans une position initiale, de sorte que l'élément de déclenchement (18) n'actionne pas l'élément de commutation (14), et que les moitiés de boîtier (2, 3) soient déplaçables l'une vers l'autre contre la force du ressort depuis ladite position initiale, pour que l'élément de déclenchement (18) actionne l'élément de commutation (14), **caractérisée en ce que** l'élément de commutation comprend au moins un microrupteur (14), **en ce que** ledit microrupteur (14) s'appuie sur une plaque de support (15) reposant sur une surface de fond (5) de la pièce inférieure de boîtier (3), laquelle est formée par une plaque de circuit imprimé équipée du microrupteur (14), et **en ce que** le ressort est formé par un ressort hélicoïdal (12).

2. Unité selon la revendication 1, **caractérisée en ce que** la plaque de support (15) comporte au moins une broche de contact (16) avec laquelle elle est fixée sur la pièce inférieure de boîtier (3).

3. Unité selon la revendication 2, **caractérisée en ce que** la plaque de circuit imprimé (15) comporte au moins une broche de contact (16) qui fixe la plaque de circuit imprimé (15) sur la pièce inférieure de boîtier (3) tout en formant une pièce de connexion électrique vers l'extérieur du boîtier (1).

4. Unité selon la revendication 3, **caractérisée en ce que** ladite au moins une broche de contact (16) s'étend sensiblement perpendiculairement à la surface de la plaque de circuit imprimé (15).

5. Unité selon la revendication 3, **caractérisée en ce que** ladite au moins une broche de contact (16) s'étend sensiblement parallèlement à la surface de la plaque de circuit imprimé (15).

6. Unité selon la revendication 4 ou 5, **caractérisée en ce qu'**un élément de connexion (17) vers lequel s'étend ladite au moins une broche de contact (16) est disposé sur la face extérieure du boîtier (1).

7. Unité selon l'une des revendications 1 à 6, **caractérisée en ce que** l'élément de commutation avec ledit au moins un microrupteur (14) présente au moins deux états de commutation à partir de la position initiale.

8. Unité selon la revendication 7, **caractérisée en ce que** deux microrupteurs (14) sont prévus, dans laquelle les deux microrupteurs (14) présentent chacun un état de commutation et commutent à des seuils de déclenchement différents.

9. Unité selon la revendication 7 ou 8, **caractérisée en ce qu'**au moins deux ressorts hélicoïdaux (12) sont prévus, dans laquelle les seuils de déclenchement différents sont définis par la force de chacun des deux ressorts hélicoïdaux (12).

10. Unité selon l'une des revendications 1 à 9, **caractérisée en ce qu'**une unité d'analyse traitant les signaux de l'élément de commutation (14) est disposée dans le boîtier (1).

11. Unité selon l'une des revendications 1 à 10, **caractérisée en ce qu'**un capteur de température est intégré au boîtier (1).

12. Unité selon la revendication 11 en relation avec la revendication 10, **caractérisée en ce que** le capteur de température est relié à l'unité d'analyse.
